# EUROPEAN PATENT APPLICATION

(11) **EP 2 270 294 A2**
(43) Date of publication of application: **05.01.2011**
(21) Application number: 10165957.1
(22) Date of filing: 15.06.2010
(51) Int. Cl.: E04H 12/08

(54) **Methods and flange for assembling towers**

(30) Priority: 30.06.2009 US 494544
(71) Applicant: General Electric Company, Schenectady, NY 12345 (US)
(72) Inventor: Sathian, Sujith, Baton Rouge, LA 70817-7025 (US)
(74) Representative: Bedford, Grant Richard

(57) **Abstract**

A flange (220) includes a weld neck (240) at least partially formed on a heated ring-shaped metal billet (306) by removing at least a portion of the heated ring-shaped metal billet as a hot rolling mechanism (300) is rolled about at least a portion of the heated ring-shaped metal billet.

## Description

The subject matter described herein generally relates to towers and, more particularly, to methods of fabricating flanges for facilitating assembly of towers for wind turbine generators.

At least some known wind turbine generators include a rotor having multiple blades. The rotor is sometimes coupled to a housing, or nacelle, that is positioned on top of a base, for example, a truss or tubular tower. At least some known utility grade wind turbines (i.e., wind turbines designed to provide electrical power to a utility grid) have rotor blades having predetermined shapes and dimensions. The rotor blades transform mechanical wind energy into induced blade lift forces that further induce a mechanical rotational torque that drives one or more generators via a rotor shaft, subsequently generating electric power. The generators are sometimes, but not always, rotationally coupled to the rotor shaft through a gearbox. The gearbox steps up the inherently low rotational speed of the rotor shaft for the generator to efficiently convert the rotational mechanical energy to electrical energy, which is fed into the electric utility grid. Gearless direct drive wind turbine generators also exist.

During assembly of many of such known wind turbine generators, a known tubular tower is constructed. Such known tubular towers are typically assembled from a plurality of at least partially frustoconical tower segments. Each tower segment is assembled from a tower can and one flange welded to each end of the can. The flanges facilitate coupling the tower segments to assemble the tower. Many known flanges are formed as ring-shaped units, or flange rings using a hot rolling process, wherein a significant portion of each flange ring is machined to form a weld joint. Such machining of the flange rings increases the costs and time associated with flange fabrication and weld joint formation.

In one aspect according to the present invention, a method for assembling a tower is provided. The method includes positioning a heated ring-shaped metal billet within a hot rolling mechanism. The method also includes rolling the hot rolling mechanism about at least a portion of the heated ring-shaped metal billet. The method further includes removing at least a portion of the heated ring-shaped metal billet, thereby at least partially forming a weld neck on the heated ring-shaped metal billet. The method also includes welding a weld neck to a tower can, thereby at least partially assembling a tower.

Rolling of the hot rolling mechanism about at least a portion of the heated ring-shaped metal billet may include positioning at least one hot roller in contact with the heated ring-shaped metal billet. Removing at least a portion of the heated ring-shaped metal billet may include using a hot roller to remove a portion of the heated ring-shaped metal billet and forming a flange pre-form that has a shape similar to a flange used to facilitate coupling adjacent sections of the tower. The method may include forming an unfinished flange that includes positioning the flange pre-form within a cold rolling mechanism, rolling the cold rolling mechanism about at least a portion of the flange pre-form, and removing a portion of the flange pre-form. Removing a portion of the flange pre-form may include forming one of an unfinished weld neck and an unmachined weld neck. The method may also include at least one of machining the unmachined weld neck and at least partially forming a weld groove on the unfinished weld neck, thereby forming a finished weld neck.

In another aspect, a flange is provided. The flange includes a weld neck at least partially formed on a heated ring-shaped metal billet by removing at least a portion of the heated ring-shaped metal billet as a hot rolling mechanism is rolled about at least a portion of the heated ring-shaped metal billet.

At least one hot roller of the hot rolling mechanism may be positioned in contact with the heated ring-shaped metal billet to remove at least a portion of the heated ring-shaped metal billet. A flange pre-form may be formed that has a shape similar to said flange when the hot roller is used to remove a portion of the heated ring-shaped metal billet. An unfinished flange may be formed when said flange pre-form is positioned within a cold rolling mechanism, the cold rolling mechanism is rolled about at least a portion of said flange pre-form, and at least a portion of said flange pre-form is removed by the cold-rolling mechanism. An unmachined weld neck may be formed when a portion of said flange pre-form is removed. An unfinished weld neck may be formed when said unmachined weld neck is machined. A weld groove may be formed on said weld neck.

In still another aspect, a method for fabricating a flange for a wind turbine generator tower section is provided. The method includes positioning a heated ring-shaped metal billet within a hot rolling mechanism. The method also includes removing at least a portion of the heated ring-shaped metal billet to form a flange pre-form. The method further includes cold rolling and machining the flange pre-form, thereby forming a flange for a wind turbine generator tower section.

Removing at least a portion of the heated ring-shaped metal billet to form a flange pre-form may include rolling the hot rolling mechanism about at least a portion of the heated ring-shaped metal billet. Rolling the hot rolling mechanism about at least a portion of the heated ring-shaped metal billet may include positioning at least one hot roller in contact with the heated ring-shaped metal billet. Cold rolling and machining the flange pre-form may include positioning the flange pre-form within a cold rolling mechanism, rolling the cold rolling mechanism about at least a portion of the flange pre-form, and removing a portion of the flange pre-form, thereby forming an unfinished flange. The method may additionally include performing a soaking heat treatment on the heated ring-shaped metal billet, and at least partially defining an opening within the heated ring-shaped metal billet. Cold rolling and machining the flange pre-form may include defining fastener apertures within at least a portion of the flange pre-form. Cold rolling and machining the flange pre-form may also include at least partially forming a weld neck on the flange pre-form.

Various aspects and embodiments of the present invention will now be described in connection with the accompanying drawings, in which:
Figure 1 is a schematic view of an exemplary wind turbine generator;
Figure 2 is a cross-sectional schematic view of a nacelle that may be used with the wind turbine generator shown in Figure 1;
Figure 3 is a schematic view of an exemplary tower that may be used with the wind turbine generator shown in Figure 1;
Figure 4 is an overhead schematic view of an exemplary flange that may be used with a section of the tower shown in Figure 3;
Figure 5 is a cross-sectional schematic view of the flange that may be used with a section of the tower shown in Figure 3;
Figure 6 is a schematic view of an exemplary hot rolling mechanism that may be used to form the flange shown in Figure 5;
Figure 7 is a schematic view of an exemplary cold rolling mechanism that may be used to form the flange shown in Figure 5;
Figure 8 is a schematic view of an exemplary partially machined flange that may be used to form the flange shown in Figure 5;
Figure 9 is a schematic view of an exemplary final machined flange that may be formed from the partially machined flange shown in Figure 8; and
Figure 10 is a flow chart of an exemplary method of assembling the tower shown in Figure 3.

The methods described herein facilitate assembly of wind turbine generators by fabricating flanges and forming weld necks on the flanges. More specifically, forming a weld neck on a flange by removing significant portions of the flange using hot and cold rolling techniques in lieu of extensive machining activities reduces labor and time associated with forming the weld neck. Moreover, additional benefits include, but are not limited to, shifting a flange-to-can weld interface away from fastener holes and away from high stress regions that include residual stresses induced as a result of forming the flange and stresses induced as a result of inserting and torquing of fasteners in the fastener holes during tower assembly. Further, such benefits include, but are not limited to, extending a life expectancy of the tower by increasing a margin to fatigue exhaustion of the flanges.

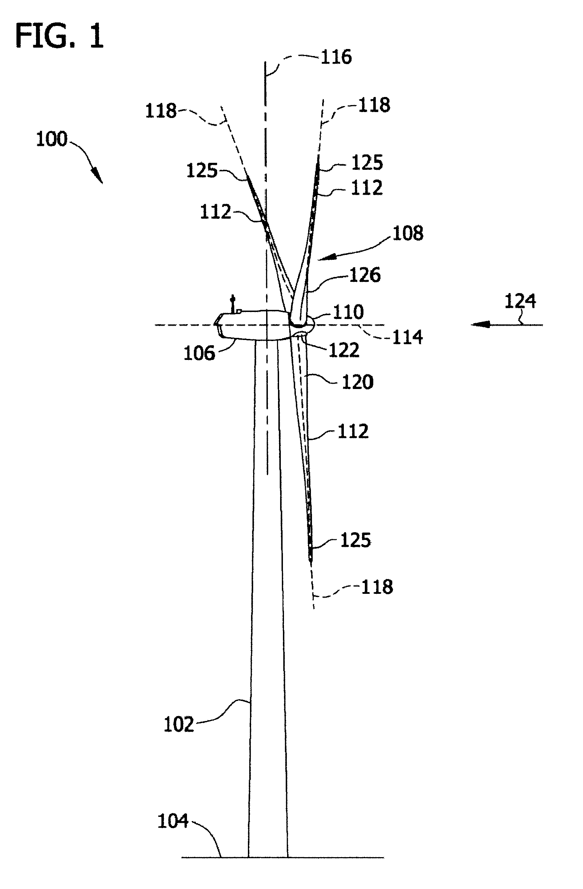

Figure 1 is a schematic view of an exemplary wind turbine generator 100. In the exemplary embodiment, wind turbine generator 100 is a horizontal axis wind turbine. Alternatively, wind turbine generator 100 may be a vertical axis wind turbine. Wind turbine generator 100 has a tower 102 extending from a supporting surface 104 that tower 102 is coupled to by either anchor bolts or a foundation mounting piece (neither shown). A nacelle 106 is coupled to tower 102, and a rotor 108 is coupled to nacelle 106. Rotor 108 has a rotatable hub 110 and a plurality of rotor blades 112 coupled to hub 110. In the exemplary embodiment, rotor 108 has three rotor blades 112. Alternatively, rotor 108 has any number of rotor blades 112 that enables wind turbine generator 100 to function as described herein. In the exemplary embodiment, tower 102 is fabricated from tubular steel extending between supporting surface 104 and nacelle 106. Alternatively, tower 102 is any tower that enables wind turbine generator 100 to function as described herein including, but not limited to, a lattice tower. Tower 102 has any suitable height that enables wind turbine generator 100 to function as described herein.

Rotor blades 112 are positioned about hub 110 to facilitate rotating rotor 108, thereby transferring kinetic energy from wind 124 into usable mechanical energy, and subsequently, electrical energy. Rotor 108 and nacelle 106 are rotated about tower 102 on a yaw axis 116 to control a perspective of rotor blades 112 with respect to a direction of wind 124. Rotor blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in rotor blades 112 are transferred to hub 110 via load transfer regions 122. Each rotor blade 112 also includes a blade tip portion 125. In the exemplary embodiment, rotor blades 112 have a length range of between 30 meters (m) (98 feet (ft)) and 50 m (164 ft), however these parameters form no limitations to the instant disclosure. Alternatively, rotor blades 112 may have any length that enables wind turbine generator 100 to function as described herein. As wind 124 strikes each rotor blade 112, blade lift forces (not shown) are induced on each rotor blade 112 and rotation of rotor 108 about rotation axis 114 is induced as blade tip portions 125 are accelerated.

A pitch angle (not shown) of rotor blades 112, i.e., an angle that determines a perspective of each rotor blade 112 with respect to the direction of wind 124, may be changed by a pitch adjustment mechanism (not shown in Figure 1). Specifically, increasing a pitch angle of rotor blade 112 decreases a blade surface area 126 exposed to wind 124 and, conversely, decreasing a pitch angle of rotor blade 112 increases blade surface area 126 exposed to wind 124. The pitch angles of rotor blades 112 are adjusted about a pitch axis 118 for each rotor blade 112. In the exemplary embodiment, the pitch angles of rotor blades 112 are controlled individually. Alternatively, rotor blades' 112 pitch may be controlled as a group.

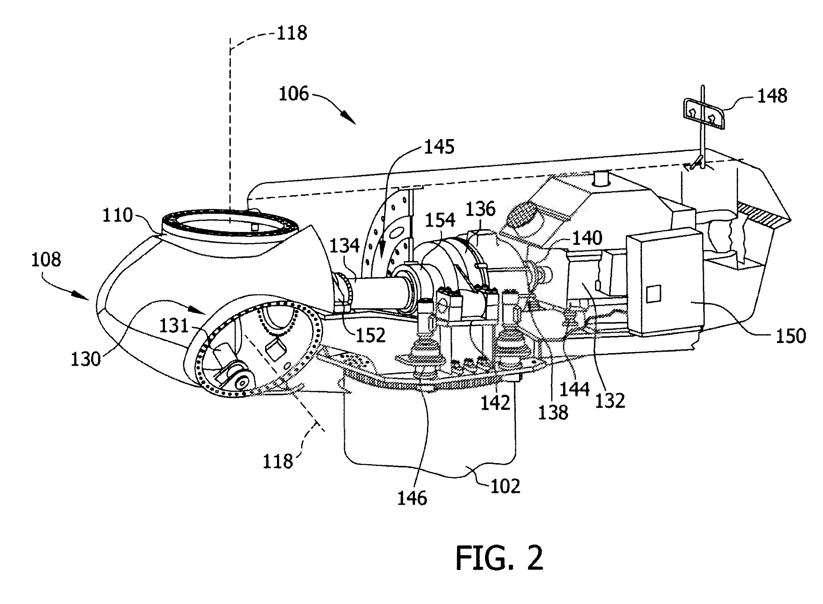

Figure 2 is a cross-sectional schematic view of nacelle 106 of wind turbine generator 100 (shown in Figure 1). Various components of wind turbine generator 100 are housed in nacelle 106 atop tower 102 of wind turbine generator 100. Nacelle 106 includes one pitch drive mechanism 130 that is coupled to one rotor blade 112 (shown in Figure 1). Pitch drive mechanism 130 modulates the pitch of associated rotor blade 112 along pitch axis 118. Only one of three pitch drive mechanisms 130 is shown in Figure 2. In the exemplary embodiment, each pitch drive mechanism 130 includes at least one pitch drive motor 131. Pitch drive motor 131 is any electric motor driven by electrical power that enables pitch drive mechanism 130 to function as described herein. Alternatively, pitch drive mechanism 130 includes any suitable structure, configuration, arrangement, and/or component such as, but not limited to, hydraulic cylinders, springs, and/or servomechanisms. Moreover, pitch drive mechanisms 130 may be driven by any suitable means such as, but not limited to, hydraulic fluid, and/or mechanical power, such as, but not limited to, induced spring forces and/or electromagnetic forces.

Nacelle 106 also includes a rotor 108 that is rotatably coupled to an electric generator 132 positioned within nacelle 106 via rotor shaft 134 (sometimes referred to as either a main shaft or a low speed shaft), a gearbox 136, a high speed shaft 138, and a coupling 140. Rotation of rotor shaft 134 rotatably drives gearbox 136 that subsequently rotatably drives high speed shaft 138. High speed shaft 138 rotatably drives generator 132 via coupling 140 and high speed shaft 138 rotation facilitates generator 132 production of electrical power. Gearbox 136 and generator 132 are supported by supports 142 and 144, respectively. In the exemplary embodiment, gearbox 136 utilizes a dual path geometry to drive high speed shaft 138. Alternatively, rotor shaft 134 is coupled directly to generator 132 via coupling 140.

Nacelle 106 further includes a yaw drive mechanism 146 that may be used to rotate nacelle 106 and rotor 108 on yaw axis 116 (shown in Figure 1) to control the perspective of rotor blades 112 with respect to the direction of wind 124. Nacelle 106 also includes at least one meteorological mast 148. Meteorological mast 148 includes a wind vane and anemometer (neither shown in Figure 2). Meteorological mast 148 provides information to a turbine control system (not shown) that may include wind direction and/or wind speed. A portion of the turbine control system resides within a control cabinet 150. In the exemplary embodiment, nacelle 106 further includes main, or forward and aft support bearings 152 and 154, respectively. Support bearings 152 and 154 facilitate radial support and alignment of rotor shaft 134. Forward support bearing 152 is positioned on rotor shaft 134 near hub 110. Aft support bearing 154 is positioned on rotor shaft 134 near gearbox 136 and/or generator 132. Alternatively, nacelle 106 includes any number of support bearings that enable wind turbine generator 100 to function as disclosed herein.

Rotor shaft 134, generator 132, gearbox 136, high speed shaft 138, coupling 140, and any associated fastening, support, and/or securing device including, but not limited to, supports 142 and 144 and support bearings 152 and 154, are referred to as a drive train 145.

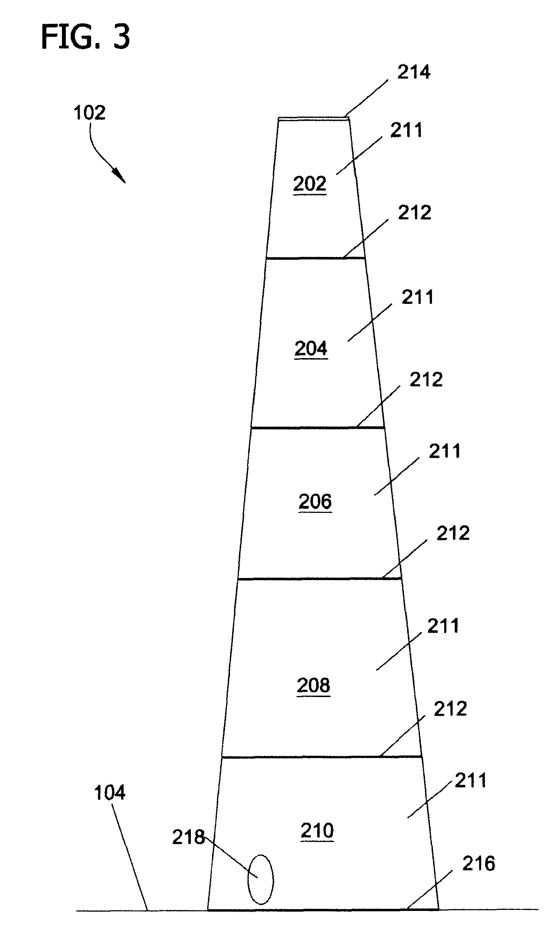

Figure 3 is a schematic view of exemplary tower 102 that may be used with wind turbine generator 100 (shown in Figure 1). In the exemplary embodiment, tower 102 includes five sections. More specifically, tower 102 includes a plurality of tower sections 202, 204, 206, 208, and 210 that are coupled to each other. Specifically, tower sections 202, 204, 206, 208, and 210 are coupled to each other via sectional flanged regions 212. Alternatively, tower 102 includes any number of tower sections that enables wind turbine generator 100 to function as described herein. Each tower section 202, 204, 206, 208, and 210 includes a tower can 211. In the exemplary embodiment, tower 102, tower sections 202, 204, 206, 208, and 210, and tower can 211 have a frustoconical shape. Alternatively, tower 102, tower sections 202, 204, 206, 208, and 210, and tower can 211 have any shape and any orientation that enables assembly of tower 102 as described herein.

Tower section 206 is described in detail below. Tower sections 202, 204, 208, and 210 are substantially similar with the exceptions that tower section 202 receives nacelle 106 (shown in Figures 1 and 2) at a flanged nacelle region 214 and section 210 is coupled to tower supporting surface 104 at a flanged supporting surface region 216. Moreover, additional exceptions include the dimensions of each tower section 202, 204, 206, 208, and 210 are different to accommodate each sections' position within tower 102 and tower section 210 includes a doorway 218.

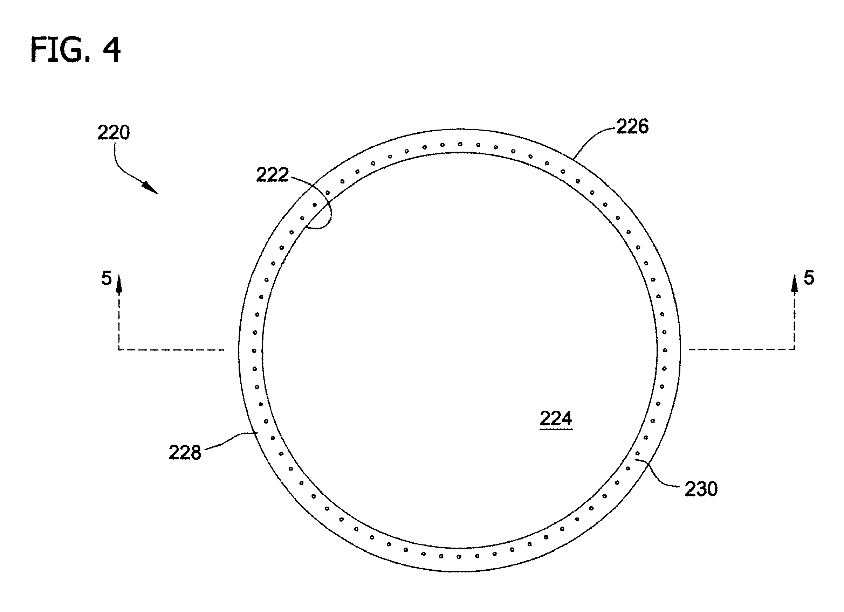

Figure 4 is an overhead schematic view of an exemplary flange 220 that may be used with tower section 206 (shown in Figure 3). In the exemplary embodiment, flange 220 includes an inner surface 222 that at least partially defines an opening 224. Flange 220 also includes an outer surface 226. A flange surface 228 is formed between inner surface 222 and outer surface 226. A plurality of fastener apertures 230 are defined within flange surface 228. Fastener apertures 230 receive mechanical fastening devices (not shown) that facilitate coupling a cooperating flange for an adjoining tower section (neither shown) to flange 220 of tower section 206. A cross-sectional view of flange 220 is taken along line 5-5.

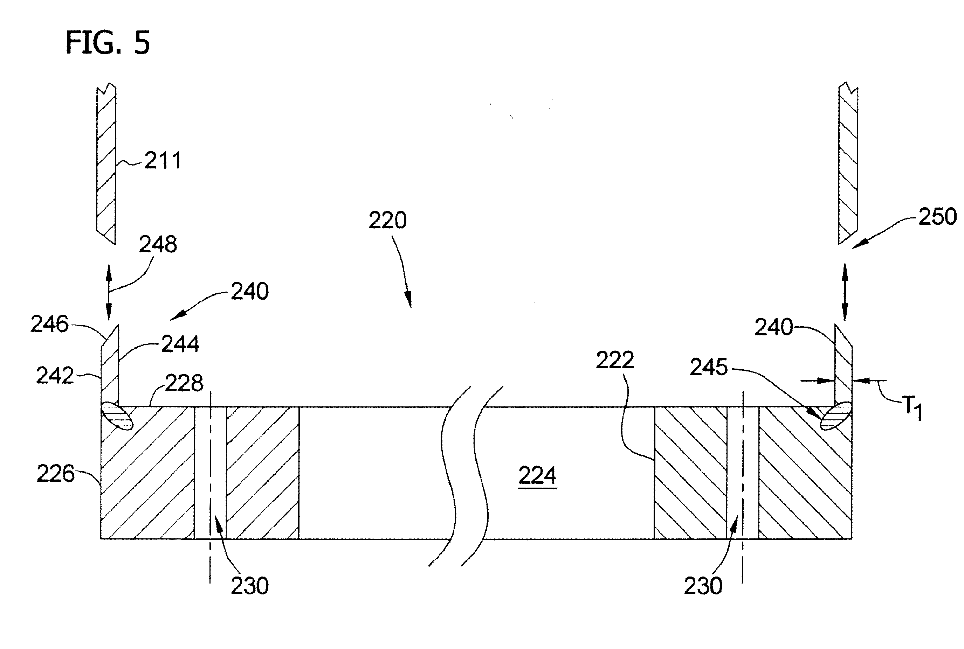

Figure 5 is a cross-sectional schematic view of exemplary flange 220 taken along line 5-5 (shown in Figure 4) that may be used with tower section 206 (shown in Figure 3). In the exemplary embodiment, flange 220 also includes a weld neck 240 that circumscribes flange surface 228 about outer surface 226. Weld neck 240 includes an outer surface 242 that is flush with outer surface 226 of flange 220. Weld neck 240 also includes an inner surface 244 that is orthogonal to flange surface 228. Alternatively, inner surface 244 and flange surface 228 have any orientation that enables assembly of tower 102 as described herein. Inner surface 244 and flange surface 228 define a high-stress region 245 and a first, or weld neck thickness T₁. Weld neck 240 further includes a weld groove 246 defmed between outer surface 242 and inner surface 244. In the exemplary embodiment, weld groove 246 is defined at oblique angles with respect to outer surface 242 and inner surface 244. Alternatively, weld groove 246 is defined with any orientation that enables flange section 206 to function as described herein. Weld groove 246 facilitates welding weld neck 240 to tower can 211, as shown by arrows 248, at a flange-to-can weld interface 250. Any suitable method of welding that enables forming flange section 206 as described herein may be used.

Weld neck 240 provides a number of benefits associated with welding tower can 211 to flange 220. Such benefits include, but are not limited to, shifting flange-to-can weld interface 250 away from fastener apertures 230 and away from high stress region 245. High stress region 245 includes residual stresses induced as a result of forming flange 220 (as described further below) and stresses induced as a result of inserting and torquing of fasteners (not shown) in fastener apertures 230 during fastening of flange 220 to an adjoining flange (not shown). Therefore, more specifically, such benefits include, but are not limited to, extending a life expectancy of tower 102 by increasing a margin to fatigue exhaustion of flange 220.

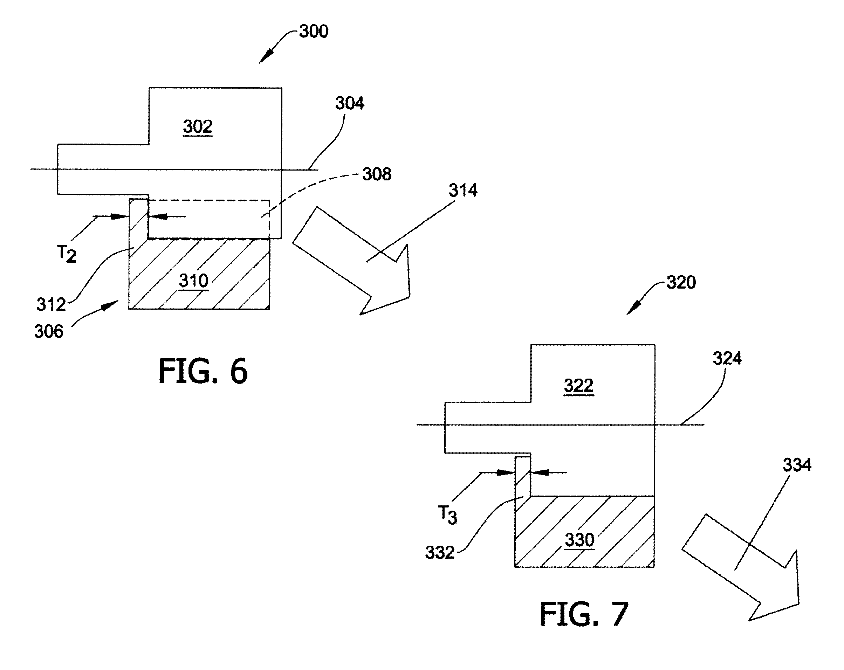

Figure 6 is a schematic view of an exemplary hot rolling mechanism 300 that may be used to form flange 220 (shown in Figure 5). In the exemplary embodiment, hot rolling mechanism 300 includes at least one roller 302 that rolls about a roller centerline 304. Figure 6 illustrates a portion of heated ring-shaped metal billet 306 that has completed a soaking heat treatment. Moreover, opening 224 (shown in Figures 4 and 5) is at least partially defined within heated ring-shaped metal billet 306. Subsequently, hot roller 302 comes into contact with a heated ring-shaped metal billet 306 and removes a first portion 308 thereby leaving a second portion, or flange pre-form 310. Flange pre-form 310 is unfinished and includes a near net shape, i.e., a shape that is similar to a shape of flange 220. Flange pre-form 310 includes an at least partially formed weld neck, i.e., a weld neck pre-form 312 that has a second, unfinished hot rolled weld neck thickness T₂ that is greater than weld neck thickness T₁ (shown in Figure 5). Therefore, flange pre-form 310 is formed and first process arrow 314 indicates flange pre-form 310 is shifted to cold rolling activities. Alternatively, in lieu of hot rolling mechanism 300, a rough ring rolling mechanism is used to form flange pre-form 310.

Figure 7 is a schematic view of an exemplary cold rolling mechanism 320 that may be used to form flange 220 (shown in Figure 5). In the exemplary embodiment, cold rolling mechanism 320 is a distinct apparatus from hot rolling mechanism 300 (shown in Figure 6). Alternatively, cold rolling activities (as described further below) are performed with hot rolling mechanism 300. Also, in the exemplary embodiment, cold rolling mechanism 320 includes at least one cold roller 322 that rolls about a roller centerline 324. Flange pre-form 310 is air-cooled and receives heat treatment. Subsequently, roller 322 comes into contact with cooled flange pre-form 310 (shown in Figure 6) and removes a portion (not shown), thereby forming an unfinished flange 330. Unfinished flange 330 includes a shape that is more similar to a shape of flange 220 than does flange pre-form 310. Unfinished flange 330 includes an unmachined weld neck 332 that has a third, or unfinished cold rolled weld neck thickness T₃ that is greater than weld neck thickness T₁ (shown in Figure 5) and less than thickness T₂ (shown in Figure 6). Therefore, unfinished flange 330 is formed and second process arrow 334 indicates unfinished flange 330, including unmachined weld neck 332, is shifted to machining activities. Alternatively, in lieu of cold rolling mechanism 320, a final ring rolling mechanism or a final hot rolling mechanism is used to form unfinished flange 330.

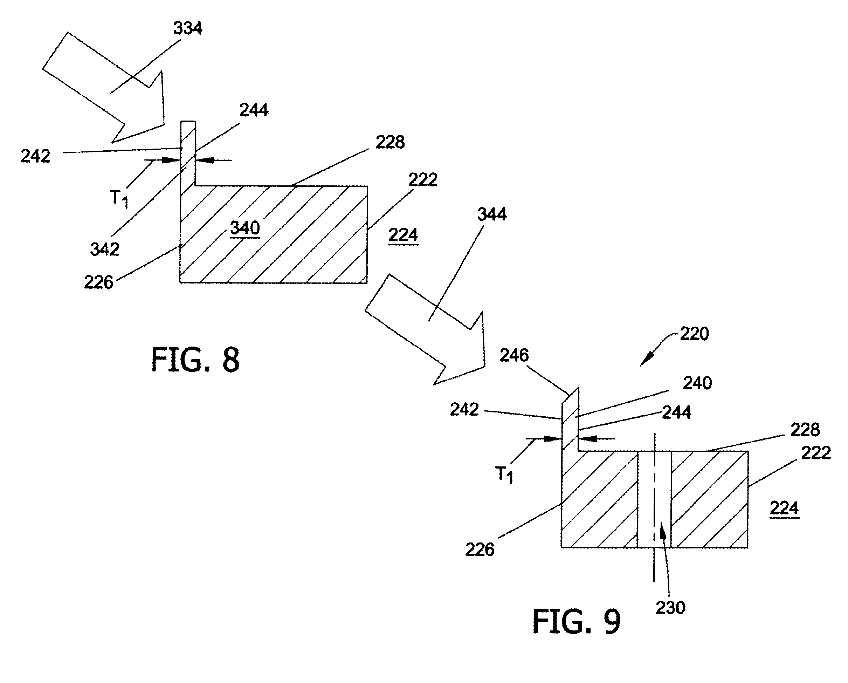

Figure 8 is a schematic view of an exemplary partially machined flange 340 that may be used to form flange 220 (shown in Figure 5). In the exemplary embodiment, partially machined flange 340 includes outer surface 226 and inner surface 228. Also, in the exemplary embodiment, partially machined flange 340 includes an unfinished weld neck 342. Unfinished weld neck 342 includes outer surface 242 and inner surface 244 that define weld neck thickness T₁. Further, in the exemplary embodiment, any machining activities that facilitate forming partially machined flange 340 from unfinished flange 330 are used that enable forming flange 220 as described herein. Therefore, partially machined flange 340 is formed and third process arrow 344 indicates partially machined flange 340, including unfinished weld neck 342, is shifted to final machining activities.

Figure 9 is a schematic view of exemplary flange 220 that may be formed from partially machined flange 340 (shown in Figure 8). In the exemplary embodiment, any machining activity that facilitates forming flange 220 from partially machined flange 340 may be used to form flange 220 as described herein. For example, in the exemplary embodiment, weld groove 246 is formed on weld neck 240 and fastener apertures 230 are defined.

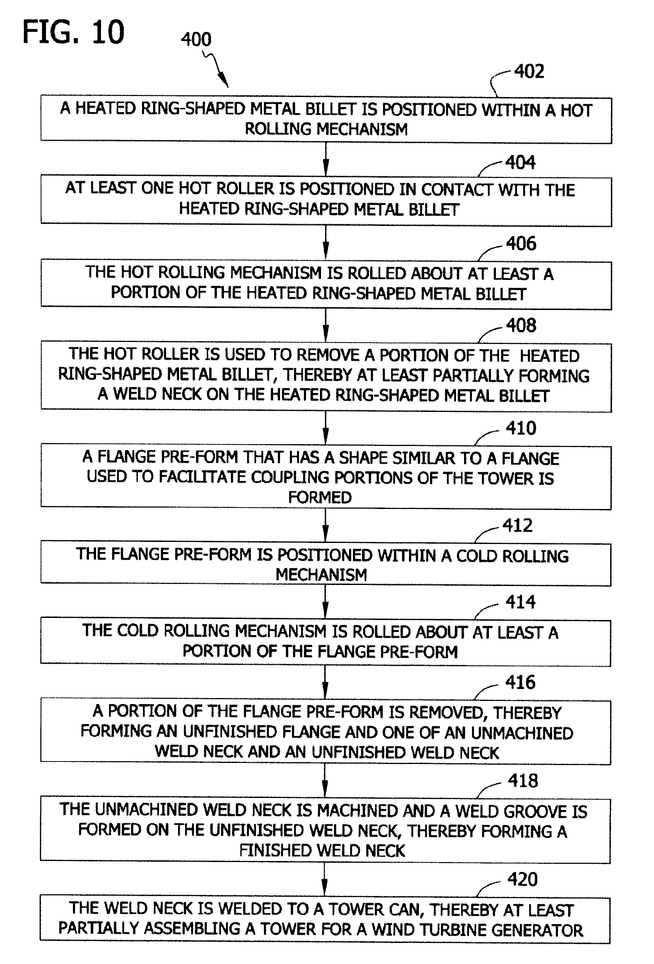

Figure 10 is a flow chart of an exemplary method 400 for assembling tower 102. Heated ring-shaped metal billet 306 is positioned 402 within hot rolling mechanism 300. At least one hot roller 302 is positioned 404 in contact with heated ring-shaped metal billet 306. Hot rolling mechanism 300 is rolled 406 about at least a portion of heated ring-shaped metal billet 306. Hot roller 302 is used 408 to remove a first portion 308 of heated ring-shaped metal billet 306, thereby at least partially forming weld neck 240 on heated ring-shaped metal billet 306. Flange pre-form 310, that has a shape similar to flange 220 and is used to facilitate coupling sections 202, 204, 206, 208, and 210 of tower 102, is formed 410. Flange pre-form 310 is positioned 412 within cold rolling mechanism 320. At least a portion of cold rolling mechanism 320 is rolled 414 about at least a portion of flange pre-form 310. A portion of flange pre-form 310 is removed 416, thereby forming unfinished flange 330 and one of unmachined weld neck 332 and unfinished weld neck 342. Unfinished weld neck 342 is machined 418 and weld groove 246 is at least partially formed on unfinished weld neck 342, thereby forming finished weld neck 240. Weld neck 240 is welded 420 to tower can 211, thereby at least partially assembling tower 102 for wind turbine generator 100.

Heated ring-shaped metal billet 306 is positioned within hot rolling mechanism 300 as a portion of an exemplary method for forming weld neck 240 on flange 220. Further, at least one hot roller 302 is positioned in contact with heated ring-shaped metal billet 306. Hot rolling mechanism 300 is rolled about at least a portion of heated ring-shaped metal billet 306. Hot roller 302 is used to remove a first portion 308 of heated ring-shaped metal billet 306, thereby at least partially forming weld neck 240 on heated ring-shaped metal billet 306. Flange pre-form 310, that has a shape similar to flange 220 and is used to facilitate coupling sections 202, 204, 206, 208, and 210 of tower 102, is formed. Flange pre-form 310 is positioned within cold rolling mechanism 320. Cold rolling mechanism 320 is rolled about at least a portion of flange pre-form 310. A portion of flange pre-form 310 is removed, thereby forming unfinished flange 330 and one of unmachined weld neck 332 and unfinished weld neck 342. Unfinished weld neck 342 is machined and weld groove 246 is at least partially formed on unfinished weld neck 342, thereby forming finished weld neck 240.

Heated ring-shaped metal billet 306 receives a soaking heat treatment as a portion of an exemplary method for fabricating flange 220 for wind turbine generator 100. Further, an opening is at least partially defined within heated ring-shaped metal billet 306. Heated ring-shaped metal billet 306 is positioned within hot rolling mechanism 300 as a portion of an exemplary method for fabricating flange 220 for wind turbine generator 100. At least one hot roller 302 is positioned in contact with heated ring-shaped metal billet 306. Hot rolling mechanism 300 is rolled about at least a portion of heated ring-shaped metal billet 306. Hot roller 302 is used to remove a first portion 308 of heated ring-shaped metal billet 306, thereby at least partially forming flange pre-form 310, that has a shape similar to flange 220 and is used to facilitate coupling sections 202, 204, 206, 208, and 210 of tower 102. Flange pre-form 310 is positioned within cold rolling mechanism 320. Cold rolling mechanism 320 is rolled about at least a portion of flange pre-form 310. Fastener apertures 230 are formed within at least a portion of flange preform 310. Weld neck 240 is at least partially formed on flange preform 310. A portion of flange pre-form 310 is removed, thereby forming unfinished flange 330.

The above-described methods facilitate assembly of wind turbine generators by fabricating flanges and forming weld necks on the flanges. Specifically, forming a weld neck on a flange using hot rolling, cold rolling, and machining techniques as described herein reduces time and costs associated with assembling wind turbine generator towers. More specifically, removing significant portions of the flange using hot and cold rolling techniques in lieu of extensive machining activities reduces labor and time in forming the weld necks. Moreover, additional benefits include, but are not limited to, shifting a flange-to-can weld interface away from fastener holes and away from high stress regions. The high stress regions include residual stresses induced as a result of forming the flange and stresses induced as a result of inserting and torquing of fasteners in the fastener holes during tower assembly. Further, such benefits include, but are not limited to, extending a life expectancy of the tower by increasing a margin to fatigue exhaustion of the flanges.

Exemplary embodiments of methods for assembling a wind turbine generator are described above in detail. The methods are not limited to the specific embodiments described herein, but rather, steps of the methods may be utilized independently and separately from other components and/or steps described herein. For example, the methods may also be used in combination with other wind turbine generators, and are not limited to practice with only the wind turbine generator as described herein. Rather, the exemplary embodiment can be implemented and utilized in connection with many other wind turbine generator applications. Moreover, while the methods described above are directed to assembling wind turbine towers, these methods may be used to form, assemble, or construct any support tower.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for assembling a tower, said method comprising:
   positioning a heated ring-shaped metal billet within a hot rolling mechanism;
   rolling the hot rolling mechanism about at least a portion of the heated ring-shaped metal billet;
   removing at least a portion of the heated ring-shaped metal billet, thereby at least partially forming a weld neck on the heated ring-shaped metal billet; and,
   welding a weld neck to a tower can, thereby at least partially assembling a tower.
2. A method in accordance with clause 1, wherein rolling of the hot rolling mechanism about at least a portion of the heated ring-shaped metal billet comprises positioning at least one hot roller in contact with the heated ring-shaped metal billet.
3. A method in accordance with any preceding clause, wherein removing at least a portion of the heated ring-shaped metal billet comprises:
   using a hot roller to remove a portion of the heated ring-shaped metal billet; and,
   forming a flange pre-form that has a shape similar to a flange used to facilitate coupling adjacent sections of the tower.
4. A method in accordance with any preceding clause, further comprising forming an unfinished flange comprising:
   positioning the flange pre-form within a cold rolling mechanism;
   rolling the cold rolling mechanism about at least a portion of the flange pre-form; and,
   removing a portion of the flange pre-form.
5. A method in accordance with any preceding clause, wherein removing a portion of the flange pre-form comprises forming one of an unfinished weld neck and an unmachined weld neck.
6. A method in accordance with any preceding clause, further comprising at least one of machining the unmachined weld neck and at least partially forming a weld groove on the unfinished weld neck, thereby forming a finished weld neck.
7. A flange comprising a weld neck at least partially formed on a heated ring-shaped metal billet by removing at least a portion of the heated ring-shaped metal billet as a hot rolling mechanism is rolled about at least a portion of the heated ring-shaped metal billet.
8. A flange in accordance with any preceding clause, wherein at least one hot roller of the hot rolling mechanism is positioned in contact with the heated ring-shaped metal billet to remove at least a portion of the heated ring-shaped metal billet.
9. A flange in accordance with any preceding clause, wherein a flange pre-form is formed that has a shape similar to said flange when the hot roller is used to remove a portion of the heated ring-shaped metal billet.
10. A flange in accordance with any preceding clause, wherein an unfinished flange is formed when said flange pre-form is positioned within a cold rolling mechanism, the cold rolling mechanism is rolled about at least a portion of said flange pre-form, and at least a portion of said flange pre-form is removed by the cold-rolling mechanism.
11. A flange in accordance with any preceding clause, wherein an unmachined weld neck is formed when a portion of said flange pre-form is removed.
12. A flange in accordance with any preceding clause, wherein an unfinished weld neck is formed when said unmachined weld neck is machined.
13. A flange in accordance with any preceding clause, wherein a weld groove is formed on said weld neck.
14. A method for fabricating a flange for a wind turbine generator tower section, said method comprising:
   positioning a heated ring-shaped metal billet within a hot rolling mechanism;
   removing at least a portion of the heated ring-shaped metal billet to form a flange pre-form; and,
   cold rolling and machining the flange pre-form, thereby forming a flange for a wind turbine generator tower section.
15. A method in accordance with any preceding clause, wherein removing at least a portion of the heated ring-shaped metal billet to form a flange pre-form comprises rolling the hot rolling mechanism about at least a portion of the heated ring-shaped metal billet.
16. A method in accordance with any preceding clause, wherein rolling the hot rolling mechanism about at least a portion of the heated ring-shaped metal billet comprises positioning at least one hot roller in contact with the heated ring-shaped metal billet.
17. A method in accordance with any preceding clause, wherein cold rolling and machining the flange pre-form comprises:
   positioning the flange pre-form within a cold rolling mechanism;
   rolling the cold rolling mechanism about at least a portion of the flange pre-form; and,
   removing a portion of the flange pre-form, thereby forming an unfinished flange.
18. A method in accordance with any preceding clause, further comprising:
   performing a soaking heat treatment on the heated ring-shaped metal billet; and,
   at least partially defining an opening within the heated ring-shaped metal billet.
19. A method in accordance with any preceding clause, wherein cold rolling and machining the flange pre-form comprises defining fastener apertures within at least a portion of the flange pre-form.
20. A method in accordance with any preceding clause, wherein cold rolling and machining the flange pre-form comprises at least partially forming a weld neck on the flange pre-form.

## Claims

1. A flange (220) comprising a weld neck (240) at least partially formed on a heated ring-shaped metal billet (306) by removing at least a portion of the heated ring-shaped metal billet as a hot rolling mechanism (300) is rolled about at least a portion of the heated ring-shaped metal billet.

2. A flange (220) in accordance with claim 1, wherein at least one hot roller (302) of the hot rolling mechanism (300) is positioned in contact with the heated ring-shaped metal billet (306) to remove at least a portion of the heated ring-shaped metal billet.

3. A flange (220) in accordance with any preceding claim, wherein a flange pre-form (310) is formed that has a shape similar to said flange when the hot roller (302) is used to remove a portion of the heated ring-shaped metal billet (306).

4. A flange (220) in accordance with any preceding claim, wherein an unfinished flange (330) is formed when said flange pre-form (310) is positioned within a cold rolling mechanism (320), the cold rolling mechanism is rolled about at least a portion of said flange pre-form, and at least a portion of said flange pre-form is removed by the cold-rolling mechanism.

5. A flange (220) in accordance with any preceding claim, wherein an unmachined weld neck (332) is formed when a portion of said flange pre-form (310) is removed.

6. A flange (220) in accordance with any preceding claim, wherein an unfinished weld neck (342) is formed when said unmachined weld neck (332) is machined.

7. A flange (220) in accordance with any preceding claim, wherein a weld groove (246) is formed on said weld neck (332).
